Europäisches Patentamt

European Patent Office

Office européen des brevets

(19)

(11) Veröffentlichungsnummer: **0 014 220**
**B1**

(12) **EUROPÄISCHE PATENTSCHRIFT**

(45) Veröffentlichungstag der Patentschrift: **26.05.82**

(51) Int. Cl.³: **G 03 B 21/54**

(21) Anmeldenummer: **79100310.6**

(22) Anmeldetag: **02.02.79**

(54) Diaprojektor mit einer Bedienungseinrichtung.

(43) Veröffentlichungstag der Anmeldung: ·
**20.08.80 Patentblatt 80/17**

(45) Bekanntmachung des Hinweises auf die Patenterteilung:
**26.05.82 Patentblatt 82/21**

(84) Benannte Vertragsstaaten:
**BE DE FR GB IT NL**

(56) Entgegenhaltungen:
**DE - A - 2 106 603**
**DE - B - 1 108 466**
**DE - B - 1 226 678**
**US - A - 3 176 579**

(73) Patentinhaber: **Rollei-Werke Franke & Heidecke
GmbH + Co KG
Salzdahlumer Strasse 196
D-3300 Braunschweig (DE)**

(72) Erfinder: **Sobotta, Reinhard, Ing. grad.
Schreiberkamp 9 ,
D-3300 Braunschweig (DE)**

(74) Vertreter: **Gramm, Werner, Dipl.-Ing. et al,
Patentanwälte Gramm + Lins Theodor-Heuss-
Strasse 2
D-3300 Braunschweig (DE)**

Courier Press, Leamington Spa, England.

Diaprojektor mit einer Bedienungseinrichtung

Die Erfindung betrifft einen Diaprojektor (1) mit einer Bedienungseinrichtung (2), die vom Diaprojektor abnehmbar als Fernbedienung verwendbar ist und die Schaltorgane (14, 15) für den Bildwechsel, die Objektivfokussierung, einen Lichzeiger und/oder einer Zeitschaltuhr (26) für den Bildwechsel aufweist, mit einem Bedienungsgehäuseteil (3) für die Aufnahme der Schaltorgane (14, 15) für den Bildwechsel und die Objektivfokussierung, das mit seiner abgesetzten unteren Hälfte (8) in eine Öffnung (12) im Diaprojektor (1) einsetzbar und über ein Zuleitungskabel (11) mit dem Diaprojektor verbunden ist.

Eine derartige Ausführungsform läßt sich der DE—B—1 226 678 entnehmen. Die Bedienungseinrichtung weist an ihrer Unterseite Durchbrüche für fünf Steckerstifte auf, die mittels einer Steckverbindung in Verbindung mit dem Zuleitungskabel zum Diaprojektor stehen. Das Bedienungsgehäuse bildet mehrere Kammern zur Aufnahme entsprechender Draht- und Kontaktklemmen, die mit den an der Oberseite angebrachten Schaltknöpfen einerseits und mit den Steckerstiften an der Unterseite andererseits verbunden sind. Vorgesehen sind Schaltorgane für den Bildwechsel und die Scharfeinstellung sowie für eine Umschaltung. Entsprechende Funktionen üben drei der fünf Steckerstifte aus. Einer der Steckerstifte dient dem Anschluß der gemeinsamen Leitung. Der fünfte Steckerstift ist für eine Einrichtung zur Fernsteuerung zusätzlicher Bestandteile des Projektors vorgesehen.

Nachteilig erscheint bei dieser vorbekannten Lösung, daß Bedienungseinrichtung immer dann, wenn sie als Fernbedienung verwendet werden soll, über ein separates Verbindungskabel mit dem Diaprojektor verbunden werden muß. Es muß also ein zusätzlicher Aufbewahrungsraum für dieses Verbindungskabel vorgesehen werden; die Handhabung ist überdies umständlich.

Als nachteilig wird ferner angesehen, daß etwaige Einrichtungen zur Fernsteuerung zusätzlicher Bestandteile des Projektors in die genannte Bedienungseinrichtung eingesetzt werden müssen. Dies könnte nur werksseitig, also nur vom Hersteller erfolgen.

In der DE - A - 2 106 603 ist ein Handstück zur Fernbedienung eines Bildprojektors beschrieben, das aus zwei oder mehreren in sich abgeschlossenen Einzelhandstücken besteht, die lösbar und funktionsgerecht sowie formschlüssig miteinander zu einer kompakten Bedienungseinheit verbunden sind. Dabei können Rastverbindungen unter Verwendung von federelastischen Bauelementen Verwendung finden. Jedes Einzelhandstück weist ein eigenes Kabel auf. In dem einen Einzelhandstück sind Schaltorgane für Vorwahl von Vor- oder Rücklauf des Diamagazins im Projektionsgerät, für den Transport sowie für die Objektiveinstellung vorgesehen. In dem anderen Einzelhandstück dienen die Schaltorgane zur Regulierung der Helligkeit der Lichtquelle des Projektors sowie für eine Zeigeeinrichtung.

Nachteilig bei diesem Lösungsvorschlag ist in erster Linie, daß sich das Handstück ausschließlich als Fernbedienung, nicht aber unmittelbar am Diaprojektor verwenden läßt. Nachteilig ist ferner, daß für jedes Einzelhandstück ein eigenes Zuleitungskabel zum Diaprojektor verlegt werden muß.

Die DE - A - 25 11 941 offenbart einen Diaprojektor mit einer Bedienungseinrichtung, die vom Diaprojektor abnehmbar als Fernbedienung verwendbar ist und ein oberes, allseitig geschlossenes Gehäuseteil für die Aufnahme der Schaltorgane für den Bildwechsel, die Objektivfokussierung sowie einer Zeitschaltuhr für den Bildwechsel und einer mit einem Betrachtungsfenster kombinierten Lichtpfeileinrichtung und ein rückseitig offenes unteres Gehäuseteil für die gefaltete Unterbringung des Verbindungskabels aufweist. Dieses Regie- bzw. Schaltpult kann an den Projektor angehängt oder von diesem abgenommen als Fernbedienung verwendet werden.

Diese Bedienungseinrichtung ist insbesondere durch die Möglichkeit einer zusätzlichen wahlweisen Diabildbetrachtung und durch die Vielzahl der Bedienungsfunktionen relativ groß und unhandlich. Der Käufer eines derartigen Diaprojektors muß immer sämtliche Zusatzfunktionen des Fernbedienungsteils mitkaufen, auch wenn er diese nur selten oder gar nicht benötigt. Andererseits reichen die angebotenen Zusatzfunktionen für spezielle Vorführzwecke nicht aus.

Der Erfindung liegt die Aufgabe zugrunde, den eingangs erläuterten Diaprojektor so zu verbessern, daß der Käufer bzw. Benutzer dieses Diaprojektors die Funktion der Bedienungseinrichtung selbst durch Anbau von Zubehörteilen erweitern kann.

Diese Aufgabe wird gemäß der Erfindung dadurch gelöst, daß neben der genannten ersten elektrischen Verbindung des Bedienungsgehäuseteils mit dem Diaprojektor in Form des Zuleitungskabels zusätzlich eine zweite elektrische Verbindungsmöglichkeit zur direkten elektrischen Verbindung weiterer Schalt- und/oder Anzeigeorgane neben den bereits im Bedienungsgehäuseteil angeordneten Schaltorganen mit dem Diaprojektor vorgesehen ist, welche in Durchbrüchen an der Unterseite des Bedienungsgehäuseteils angeordnete elektrische Kontaktbuchsen umfaßt, die mit dem Zuleitungskabel in Verbindung stehen.

Die neue Bedienungseinrichtung kann, da sie lediglich die Hauptbedienungsfunktionen umfaßt, so klein gehalten werden, daß sie an nahezu jeder Stelle des Diaprojektorgehäuses leicht eingesetzt werden kann, ohne sich von der Außenkontur des Diaprojektors abzuheben. Auch bei einer Verbindung des Bedienungsgehäuseteils mit einem weiteren Zubehörteil, z.B. einer Lichtzeigereinrichtung, geht die Handlichkeit der Fernbedienungseinrichtung nicht verloren, so daß eine Einhandbedienung möglich bleibt. Außerdem werden die Herstellungskosten für den Diaprojektor ohne besondere Zubehörteile erheblich vermindert. Andererseits erweitert die Möglichkeit, die Fernbedienung um bestimmte Vorführfunktionen ergänzen zu können, den Kreis der Interessenten. Auch bei umfangreicher Erweiterung der Zusatzfunktionen der Fernbedienungseinrichtung bleibt der Komfort eines einzigen Zuleitungskabels erhalten. Vorteilhaft ist ferner, daß die Bedienungseinrichtung mit diesem Zuleitungskabel ständig verbunden sein kann und zwar auch dann, wenn die Bedienungseinrichtung unmittelbar am Diaprojektor angeordnet ist.

In einer Weiterentwicklung des erfindungsgemäßen Diaprojektors ist es vorteilhaft, wenn an die von der oberen Hälfte des Bedienungsgehäuseteils abgesetzte untere Hälfte bei Verwendung des Bedienungsgehäuseteils als Fernbedienungseinrichtung ein weiteres Zubehörteil mit einer entsprechend großen Öffnung in seiner oberen Gehäusehälfte zentriert ansetzbar ist, und die elektrische Verbindung dieses Zubehörteils mit dem Diaprojektor über Kontaktstifte in der Öffnung an der Oberseite der oberen Gehäusehälfte des Zubehörteils, die in die entsprechenden Kontaktbuschen an der Unterseite des Bedienungsgehäuseteils einsetzbar sind, erfolgt.

Vorteilhaft ist hierbei, daß die gleichen Halterungselemente, mit denen das Bedienungsgehäuseteil am Diaprojektor gehalten wird, auch zur Halterung der Zubehörteile dienen.

Weitere Erfindungsmerkmale sind Gegenstand der Unteransprüche und werden zusammen mit weiteren Vorteilen der Erfindung anhand von Ausführungsbeispielen erläutert.

In der Zeichnung sind einige als Beispiele dienende Ausführungsformen der Erfindung dargestellt. Es zeigen:

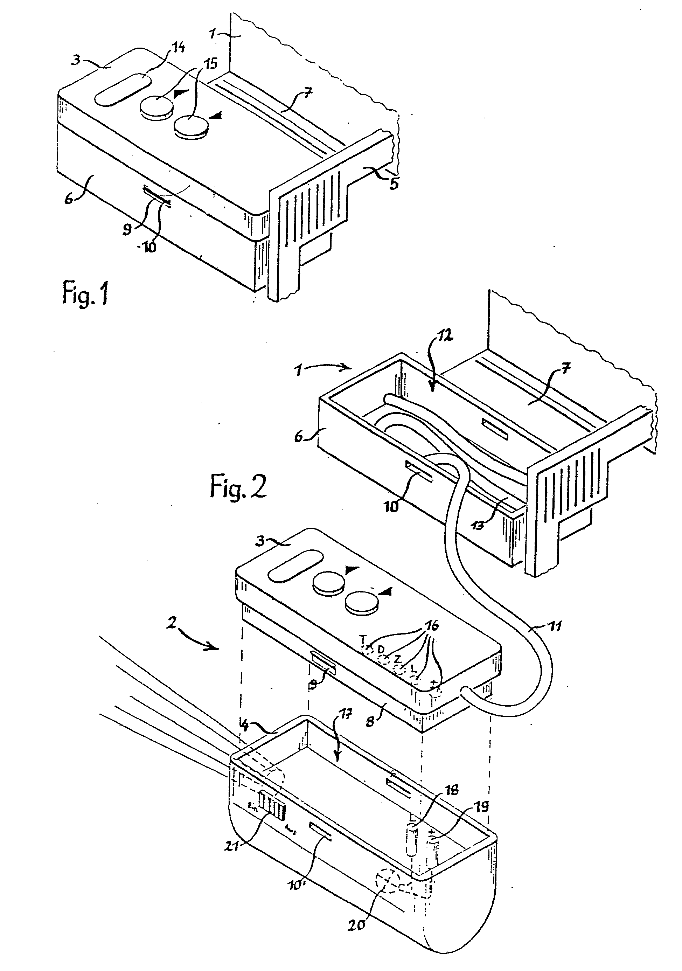

Fig. 1 in perspektivischer Darstellung einen erfindungsgemäßen Diaprojektor mit einem eingebauten Bedienungsgehäuseteil und

Fig. 2 einen Ausschnitt des in Fig. 1 dargestellten Diaprojektors mit einer Fernbedienungseinrichtung in Explosionsdarstellung, bei der an das abgenommene Bedienungsgehäuseteil als Zubehörteil eine Lichtzeigereinrichtung angesteckt ist.

Fig. 3 die gleiche Darstellung wie in Fig. 2, bei der jedoch anstelle des Lichtzeigerzubehörteils als mögliche Zubehörteile die Zähleinheit, die Dimmereinrichtung und das Zeitschaltwerk (Timer) dargestellt sind,

Fig. 4 eine andere Ausführungsform des in Fig. 2 dargestellten Lichtzeiger-Zubehörteils, an das ein weiteres Zubehörteil in Form einer Zähleinheit angesteckt ist.

In den Figuren ist mit 1 ein Diaprojektor, mit 2 eine Fernbedienungseinrichtung, mit 3 das Bedienungsgehäuseteil und mit 4 das Lichtzeiger-Zubehörteil bezeichnet. Das Bedienungsgehäuseteil 3 ist neben dem Diagreifer 5 in die Wand 6 der Magazinbahn 7 eingelassen. Etwa in der Mitte des Bedienungsgehäuseteils 3 ist in der unteren Gehäusehälfte 8 eine Rastzunge 9 angeordnet, die in eine entsprechende Rastnut 10 in der Wand 6 des Diaprojektors 1 bzw. eine entsprechende Rastnut 10' in der Wand des Lichtzeiger-Zubehörteils 4 eingreift.

Das Bedienungsgehäuseteil 3 ist über ein Zuleitungskabel 11 durch die von der Wand 6 gebildete Öffnung 12 und dem darunter befindlichen Aufbewahrungsraum 13 mit dem Diaprojektor 1 verbunden. Das Bedienungsgehäuseteil 3 weist an seiner Oberseite die Hauptbedienungselemente, das Bildwechselorgan 14 und die Objektivfokussierung 15 auf. An seiner Unterseite besitzt es Kontaktbuchsen (gestrichelt dargestellt) die mit dem Zuleitungskabel 11 in Verbindung stehen. Die Kontaktbuchsen 16 bestehen aus dem Pluspol (+) und dem jeweiligen Minuspol (L, Z, D, T) für die jeweiligen Zubehörteile.

Das Lichtzeiger-Zubehörteil 4 weist, in gleicher Weise wie die Wand 6 des Diaprojektors 1, in seiner oberen Hälfte eine Öffnung 17 auf, in die die untere Gehäusehälfte 8 des Bedienungsgehäuseteils 3 einsetzbar ist. Die Zentrierung erfolgt dabei durch die abgesetzte Aufnahmekontur des Bedienungsgehäuses 3. Die elektrische Verbindung mit dem Diaprojektor erfolgt über den in der Mitte der Öffnung 17 angeordneten Kontaktstift 18 (L) und den Kontaktstift 19 (+). In der unteren Hälfte des Lichtzeigerzubehörteils 4 ist eine Glühbirne 20 (gestrichelt dargestellt), die mit den Kontaktstiften 18, 19 verbunden ist, angeordnet. Durch entsprechende optische Einrichtungen wird der Lichtzeiger an der Stirnseite des Lichtzeiger-Zubehörteils 4 abgestrahlt. An der Seitenwand der oberen Gehäusehälfte befindet sich der Ein-/Ausschalter 21.

Die bei der Stromversorgung verwendeten elektrischen Kontaktstifte 18 und 19 liegen sicher innerhalb der Öffnung 17 und dienen allein der elektrischen Kontaktierung und nicht der mechanischen Halterung des Lichtzeiger-Zubehörteils 4. Die Zentrierung und Halterung von Bedienungsgehäuseteil 3 und Lichtzeiger-Zubehörteil 4 bewirken die abgesetzte Aufnahmekontur der unteren Hälfte des Bedienungsgehäuseteils 3 und die Öffnung 17 sowie die Rastzunge 9 und die Rastnut 10'. Im zusammengeschobenen Zustand bildet die Fernbedienungseinrichtung 2 eine handliche Lichtzeigereinrichtung, die vom Diaprojektor 1 mit Strom versorgt wird.

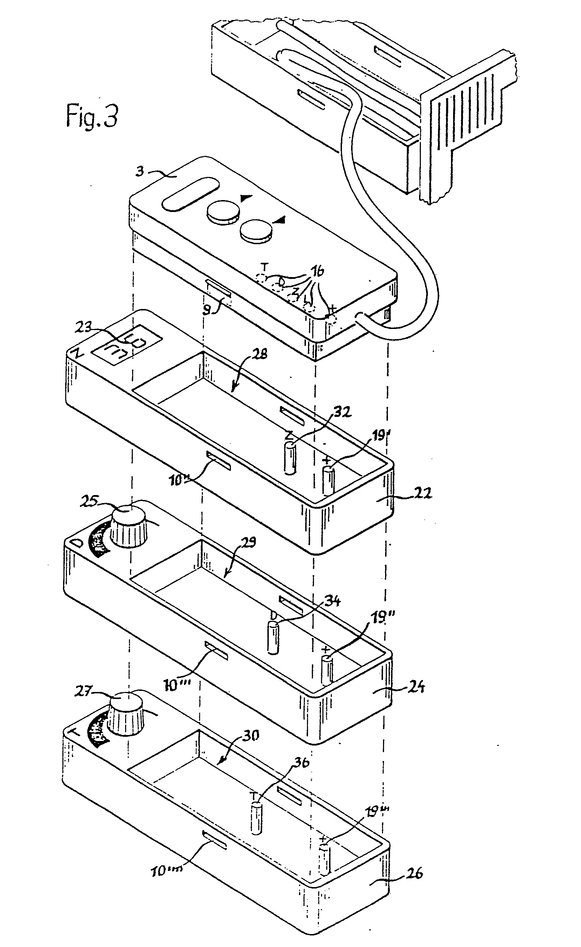

In Fig. 3 sind als weitere mögliche Zubehörteile die Zähleinheit 22 mit einer LED-Anzeige 23, die Dimmereinrichtung 24 für die nicht dargestellte Projektionslampe mit dem Einstellpotentiometer 25 und ein Zeitschaltwerk 26 für den Bildwechsel mit dem Einstellpotentiometer 27 dargestellt.

Die Zubehörteile (22, 24, 26) weisen gleichfalls Aufnahmeöffnungen 28, 29, 30 für die abgesetzte untere Gehäusehälfte 8 des Bedienungsgehäuseteils 3 auf. Die Pluspolkontaktstifte 19', 19", und 19''' sowie die versetzt angeordneten Kontakstifte 32 (Z), 34 (D) und 36 (T) arbeiten mit den entsprechenden Kontaktbuchsen 16 (Z, D, L) am Boden der Bedienungsgehäuseteils 3 zusammen. Die Zentrierung der Zubehörteile 22, 24 und 26 erfolgt über die Aufnahmeöffnungen 28, 29 und 30, und ihre Halterung wird durch die jeweils in die Rastnuten 10", 10''' oder 10'''' einrastende Rastzunge bewirkt.

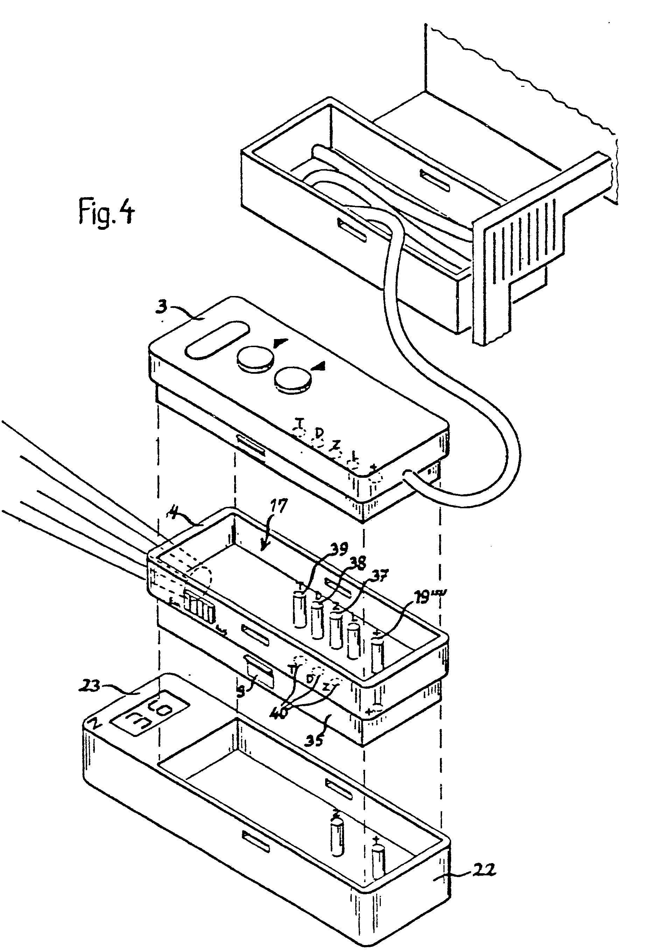

In Figur 4 ist ein Ausführungsbeispiel dargestellt, bei dem an ein erstes Zubehörteil ein zweites ansetzbar ist. Im vorliegenden Fall ist die Lichtzeigereinrichtung 4 so ausgebildet, daß ihre untere Gehäusehälfte 35 das Zubehörteil 22 mit der Zähleinheit und der LED-Anzeige 23 aufnehmen kann. Zu diesem Zweck weist diese besonders ausgestaltete Lichtzeigereinrichtung 4 in ihrer Aufnahmeöffnung 17 zusätzliche Kontaktstifte 37 (Z), 38 (D) und 39 (T) und die zugehörigen Kontaktbuchsen 40 (Z, D, T) (gestrichelt dargestellt) auf, damit die Stromzuführung für weitere Zubehörteile gewährleistet ist.

Bei dieser Ausführungsform ist es demnach je nach verwendetem weiterer Zubehörteil möglich, neben der Lichtzeigereinrichtung 4 ein zusätzliches weiteres Zubehörteil z.B. die Zähleinheit 22, die Dimmereinrichtung 24 oder das Zeitschaltwerk 26 für den Bildwechsel zu verwenden. Die Handlichkeit der Fernbedienung als Ganzes wird dadurch nur unwesentlich beeinträchtigt.

Die Erfindung ist nich auf die beschriebenen Ausführungsbeispiele beschränkt. So können z.B. auch Zubehörteile zur Einzeldiabetrachtung oder andere Bedienungselemente an das Bedienungsgehäuseteil 3 oder die Lichtzeigereinrichtung 4 separat angesetzt werden.

**Patentansprüche**

1. Diaprojektor (1) mit einer Bedienungseinrichtung (2), die vom Diaprojektor abnehmbar als Fernbedienung verwendbar ist und die Schaltorgane (14, 15) für den Bildwechsel, die Objektivfokussierung, einen Lichtzeiger und/oder eine Zeitschaltuhr (26) für den Bildwechsel aufweist, mit einem Bedienungsgehäuseteil (3) für die Aufnahme der Schaltorgane (14, 15) für den Bildwechsel und die Objektivfokussierung, das mit seiner abgesetzten unteren Hälfte (8) in eine Öffnung (12) im Diaprojektor (1) einsetzbar und über ein Zuleitungskabel (11) mit dem Diaprojektor verbunden ist, dadurch gekennzeichnet, daß neben der genannten ersten elektrischen Verbindung des Bedienungsgehäuseteils (3) mit dem Diaprojektor (1) in Form des Zuleitungskabels (11) zusätzlich eine zweite elektrische Verbindungsmöglichkeit zur direkten elektrischen Verbindung weiterer Schalt- und/oder Anzeigeorgane (4, 22, 24, 26) neben den bereits im Bedienungsgehäuseteil (3) angeordneten Schaltorganen (14, 15) mit dem Diaprojektor vorgesehen ist, welche in Durchbrüchen an der Unterseite des Bedienungsgehäuseteils (3) angeordnete elektrische Kontaktbuchsen (16) umfaßt, die mit dem Zuleitungskabel (11) in Verbindung stehen.

2. Diaprojektor nach Anspruch 1, dadurch gekennzeichnet, daß an die von der oberen Hälfte des Bedienungsgehäuseteils (3) abgesetzte untere Hälfte (8) bei Verwendung des Bedienungsgehäuseteils (3) als Fernbedienungseinrichtung (2) ein weiteres Zubehörteil mit einer entsprechend großen Öffnung in seiner oberen Gehäusehälfte zentriert ansetzbar ist, und die elektrische Verbindung dieses Zubehörteils mit dem Diaprojektor (1) über Kontaktstifte (18, 19; 32, 19'; 34, 19"; 37, 38, 39, 19'''') in der Öffnung an der Oberseite der oberen Gehäusehälfte des Zubehörteils, die in die entsprechenden Kontaktbuchsen (16) an der Unterseite des Bedienungsgehäuseteils (3) einsetzbar sind, erfolgt.

3. Diaprojektor nach Anspruch 2, dadurch gekennzeichnet, daß die Konturen der oberen Hälfte des Bedienungsgehäuseteils (3) des Diaprojektors (1) und diejenigen Konturen des Zubehörteils (4, 22, 24, 26), die an die Konturen der oberen Hälfte des Bedienungsgehäuseteils (3) im aufgesteckten Zustand anschließen, einander angepaßt sind.

4. Diaprojektor nach Anspruch 3, dadurch gekennzeichnet, daß die Lichtzeigereinrichtung (4) als Zubehörteil ausgebildet ist.

5. Diaprojektor nach Anspruch 3, dadurch gekennzeichnet, daß eine Zähleinheit (22) mit einer LED-Anzeige (23) als Zubehörteil ausgebildet ist.

6. Diaprojektor nach Anspruch 3, dadurch gekennzeichnet, daß eine Dimmereinrichtung (24) für die Projektionslampe als Zubehörteil ausgebildet ist.

7. Diaprojektor nach Anspruch 3, dadurch gekennzeichnet, daß das Zeitschaltwerk (26) für den Bildwechsel als Zubehörteil ausgebildet ist.

8. Diaprojektor nach Anspruch 3, dadurch gekennzeichnet, daß auch die Lichtzeigereinrichtung eine abgesetzte untere Gehäusehälfte (35) aufweist, die so ausgebildet ist, daß sie ein weiteres Zubehörteil aufnehem kann, und an der Oberseite der Lichtzeigereinrichtung (4) zusätzliche Kontaktstifte (37, 38 und 39) und an der Unterseite mit diesen verbundene Kontaktbuchsen (40) für die Stromzuführung zu weiteren Zubehörteilen (22, 24, 26) vorgesehen sind.

**Claims**

1. Slide projector (1) with an operating device (2) which is detachable from the slide projector for use as a remote control and which is equipped with controls (14, 15) for picture change, lens focussing, a light pointer and/or a timer (26) for the picture change, with an operating housing section (3) for housing the controls (14, 15) for picture change and lens focussing, the stepped lower half (8) of which fits into an opening (12) in the slide projector (1) and is connected via a feed cable (11) with the slide projector, characterised in that apart from the said first electrical connection of the operating housing section (3) with the slide projector (1) in the form of a feed cable (11) there is additionally provided a second electrical connecting possibility for directly electrically connecting further controls and/or indicators (4, 22, 24, 26) other than the controls (14, 15) arranged in the operating housing section (3) with the slide projector, whereby the second electrical connecting possibility comprises electrical contact sockets (16) arranged in holes in the bottom of the operating housing section (3), which are in communication with the feed cable (11).

2. Slide projector according to Claim 1, characterised in that a further attachment with a correspondingly large opening in its upper housing half may be centrally attached to the lower half (8) of the operating housing section (3) which is stepped from the upper half, when the operating housing section (3) is used as a remote control device (2), and in that this attachment is electrically connected with the slide projector (1) via contact pins (18, 19; 32, 19''; 34, 19''; 36, 19'''', 37, 38, 39, 19'''') in the opening at the top of the upper housing half of the attachment, which fit into the respective contact sockets (16) at the bottom of the operating housing section (3).

3. Slide projector according to claim 2, characterised in that the contours of the upper half of the operating housing section (3) of the slide projector (1) and those contours of the attachment (4, 22, 24, 26) which connect to the contours of the upper half of the operating housing section (3) when fitted, are adapted to each other.

4. Slide projector according to claim 3, characterised in that the light pointer unit (4) is shaped as an attachment.

5. Slide projector according to claim 3, characterised in that a counting unit (22) with LED indicator (23) is shaped as an attachment.

6. Slide projector according to claim 3, characterised in that a dimmer unit (24) for the projector lamp is shaped as an attachment.

7. Slide projector according to claim 3, characterised in that the timing unit (26) for the picture change is shaped as an attachment.

8. Slide projector according to claim 3, characterised in that the light pointer unit also has a stepped lower housing half (35) which is shaped in such a way that it can accept a further attachment, and in that additional contact pins (37, 38 and 39) are provided at the top of the light pointer unit (4) and contact sockets (40) connected to these on the bottom of this unit for feeding current to further attachments (22, 24, 26).

## Revendications

1. Projecteur de diapositives (1), comportant un dispositif de commande (2) pouvant être séparé du projecteur pour servir de commande à distance et présentant les organes de commutation (14, 15) pour le changement des vues, la mise au point de l'objectif, un indicateur lumineux et/ou une minuterie (26) pour le changement des vues, et comprenant une pièce de boîtier de commande (3) hébergeant les organes de commutation (14, 15) pour le changement des vues et la mise au point de l'objectif, ladite pièce étant emboîtable par sa moitié inférieure en retrait (8) dans un ouverture (12) du projecteur (1) et reliée à ce dernier par un câble de jonction (11), caractérisé en ce que, à côté de la première liaison électrique citée entre la pièce de boîtier de commande (3) et le projecteur (1) sous la forme du câble de jonction (11), il est prévu de plus une deuxième possibilité de liaison électrique avec le projecteur pour le raccordement électrique direct d'autres organes de commutation et/ou d'indication (4, 22, 24, 26) outre les organes de commutation (14, 15) déjà disposés dans la pièce de boîtier de commande (3), cette deuxième liaison comprenant des douilles de contact électriques disposées dans des passages ménagés à travers le fond de la pièce de boîtier de commande (3) et connectées au câble de jonction.

2. Projecteur selon la revendication 1, caractérisé en ce que lorsque la pièce de boîtier de commande (3) est utilisée comme dispositif de commande à distance (2), on peut monter avec centrage sur la moitié inférieure (8) en retrait de la moitié supérieure de ladite pièce un autre accessoire présentant une ouverture de dimensions correspondantes dans la moitié supérieure de son boîtier, la liaison électrique de cet accessoire avec le projecteur (1) s'obtenant par des broches de contact (18, 19; 32, 19'; 34, 19''; 36, 19'''; 37, 38, 39, 19'''') dans l'ouverture du dessus de la moitié supérieure de boîtier de l'accessoire, enfichables dans les douilles de contact correspondantes (16) placées sur le fond de la pièce de boîtier de commande (3). .

3. Projecteur selon la revendication 2, caractérisé en ce que les contours de la moitié supérieure de la pièce de boîtier de commande (3) du projecteur (1) et ceux de l'accessoire (4, 22, 24, 26), qui à l'état emboîté, se raccordent par emboîtement aux contours de la moitié supérieure de la pièce de boîtier de commande (3), sont réciproquement adaptés.

4. Projecteur selon la revendication 3, caractérisé en ce que le dispositif d'indicateur lumineux (4) est réalisé sous forme d'accessoire.

5. Projecteur selon la revendication 3, caractérisé en ce qu'un compteur (22) à affichage par diodes électroluminescentes (23) est réalisé sous forme d'accessoire.

6. Projecteur selon la revendication 3, caractérisé en ce qu'un variateur de lumière (24) pour la lampe de projection est réalisé sous forme d'accessoire.

7. Projecteur selon la revendication 3, caractérisé en ce que la minuterie (26) pour le changement des vues est réalisé sous forme d'accessoire.

8. Projecteur selon la revendication 3, caractérisé en ce que le dispositif d'indicateur lumineux comporte aussi une moitié inférieure de boîtier en retrait (35) conformée afin de pouvoir recevoir un autre accessoire, des broches de contact supplémentaires (37, 38, et 39) étant prévues sur le dessus du dispositif d'indicateur lumineux (4), le fond portant des douilles de contact (40) reliés auxdites broches pour alimenter en courant d'autres accessoires (22, 24, 26).

Fig. 1

Fig. 2

Fig.3

Fig.4